Europäisches Patentamt

(19) **European Patent Office**

**Office européen des brevets**

(11) Numéro de publication: **0 048 425**
**B1**

(12) **FASCICULE DE BREVET EUROPEEN**

(45) Date de publication du fascicule du brevet: 02.01.85

(51) Int. Cl.⁴: **H 01 S 3/097**

(21) Numéro de dépôt: **81107247.9**

(22) Date de dépôt: **15.09.81**

(54) **Laser à gaz.**

(30) Priorité: **18.09.80 FR 8020083**

(43) Date de publication de la demande:
**31.03.82 Bulletin 82/13**

(45) Mention de la délivrance du brevet:
**02.01.85 Bulletin 85/01**

(84) Etats contractants désignés:
**BE DE FR GB IT NL SE**

(56) Documents cités:
**GB-A-2 008 846**

**LASER + ELEKTRO OPTIK, vol. 12, no. 2, juin 1980, Stuttgart, DE, "Die Firma Boc in England - Hersteller von CO2- und Festkörperlasern- ist nun auch auf dem deutschen Markt vertreten", page 52**
**Optical & Quantrum Electronics, vol. 11, no. 3, mars 1979, Londres, GB, "A simple and reliable atmospheric pressure nitrogen laser", pages 276-277**

(73) Titulaire: **COMPAGNIE GENERALE D'ELECTRICITE Société anonyme dite:**
**54, rue La Boétie**
**F-75382 Paris Cedex 08 (FR)**

(72) Inventeur: **Vannier, Maurice**
**1, rue Gounod**
**F-91240 St Michel Sur Orge (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un laser à gaz selon le préambule de la revendication 1.

Un tel laser est connu, par exemple à partir de la revue britannique "OPTICAL and QUANTUM ELECTRONICS", vol. 11 n° 3, 1979, pages 276 et 277. Ce laser comprend deux électrodes disposées le long d'un axe suivant un plan passant par l'axe, de façon à former un canal laser, une enceinte entourant le canal laser, des moyens pour faire circuler de l'azote dans l'enceinte à travers trois canalisations internes d'une électrode, et une ligne plate Blumlein pour déclencher une décharge entre les électrodes.

Un tel laser à gaz présente l'inconvénient de délivrer des impulsions dont la fréquence de répétition est limitée à un taux relativement faible.

La présente invention a pour but de pallier cet inconvénient et de réaliser un laser à gaz dont la fréquence de répétition des impulsions délivrées peut atteindre des valeurs plus élevées.

La présente invention a pour objet un laser à gaz comprenant

— deux électrodes plates et allongées disposées le long d'un axe dans un même plan passant par l'axe, ces électrodes comportant respectivement deux surfaces latérales internes en regard l'une de l'autre et de part et d'autre de l'axe,

— une enceinte entourant l'axe et les surfaces latérales internes,

— des moyens pour faire circuler un gaz actif dans l'enceinte, l'amenée de gaz ayant lieu à travers une des électrodes,

— une cavité optique résonante disposée dans l'enceinte suivant ledit axe,

— et des moyens pour déclencher une décharge électrique haute tension entre les deux électrodes, de façon à exciter le gaz actif et créer un rayonnement laser sortant de la cavité, caractérisé en ce que

— chaque électrode est formée d'une enveloppe métallique entourant un volume creux, cette enveloppe comportant une pluralité d'ouvertures traversant la partie de l'enveloppe constituant la surface latérale interne, ces ouvertures étant régulièrement espacées entre elles et mettant en communication le volume creux de l'électrode avec l'intérieur de l'enceinte,

— et en ce que lesdits moyens pour faire circuler un gaz actif dans l'enceinte comportent des canalisations débouchant dans le volume creux des électrodes, de façon que le gaz s'écoule dans l'enceinte transversalement par rapport audit axe, la deuxième électrode servant de sortie au gaz.

Des formes de réalisation de la présente invention sont décrites ci-dessous, à titre d'exemple, en référence aux dessins annexés dans lesquels

— la figure 1 représente, en coupe transversale, un premier mode de réalisation du laser selon l'invention,

— la figure 2 représente, en coupe transversale, un deuxième mode de réalisation du laser selon l'invention,

— la figure 3 est une vue en perspective éclatée d'une électrode pouvant être utilisée pour réaliser les lasers illustrés par les figures 1 et 2,

— la figure 4 est une vue en perspective éclatée d'une variante de l'électrode illustrée par la figure 3

— et la figure 5 est une vue en perspective éclatée d'une autre variante de l'électrode illustrée par la figure 3.

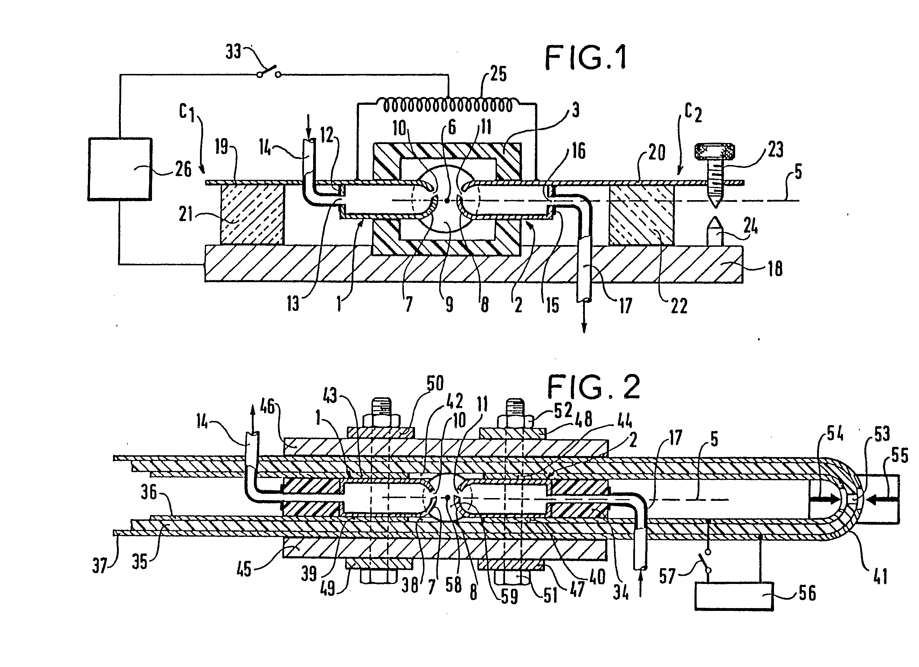

Sur la figure 1, deux électrodes métalliques 1 et 2 traversent chacune la surface latérale d'une enceinte parallélépipédique 3, allongée suivant un axe 6 et constituée d'une matière isolante. Les électrodes 1 et 2 sont disposées suivant un plan 5 perpendiculaire aux deux faces traversées de l'enceinte 3, ce plan contenant l'axe 6 de l'enceinte 3. Les électrodes 1 et 2 comportent respectivement deux surfaces longitudinales 7 et 8, parallèles à l'axe 6 et disposées à l'intérieur de l'enceinte en regard l'une de l'autre. Chaque électrode est formée d'une enveloppe entourant un volume creux. Cette enveloppe a extérieurement la forme d'un parallélépipède sur une face duquel est appliqué un demi-cylindre dont les génératrices sont parallèles à l'axe 6, ce demi-cylindre correspondant à la surface longitudinale mentionnée ci-dessus. Sur les deux faces extrêmes de l'enceinte 3 sont disposés deux miroirs tels que 9 formant une cavité optique résonnante d'axe 6, un de ces miroirs étant semi-transparent.

Les surfaces longitudinales 7 et 8 comportent une pluralité d'ouvertures telles que 10 et 11 dont la forme et la répartition sera précisée par la suite. Ces ouvertures mettent en communication le volume creux de l'électrode avec l'intérieur de l'enceinte 3. Sur chaque électrode, la face de l'enveloppe qui est opposée à la surface longitudinale comporte au moins une percée. C'est ainsi que la face 12 de l'enveloppe de l'électrode 1 est munie d'une percée 13 à laquelle est raccordée une canalisation 14. De même, la face 15 de l'enveloppe 2 est munie d'une percée 16 à laquelle est raccordée une canalisation 17.

L'enceinte 3 est fixée sur un support métallique 18 en forme de plaque parallèle au plan 5. Une face, parallèle au plan 5, de l'enveloppe de chaque électrode se prolonge vers l'extérieur de l'enceinte suivant une plaquette 19, 20. Entre la plaquette 19 et le support 18 est fixé, par exemple par collage, un bloc diélectrique 21 constitué par exemple de titanate de baryum. De même, un bloc diélectrique 22 analogue au bloc 21 est fixé entre la plaquette 20 et le support 18. Au delà du bloc diélectrique 22, une électrode auxiliaire 23 est vissée dans la plaquette 20 perpendiculairement au plan 5.

L'extrémité de l'électrode 23 est en regard de l'extrémité d'une pointe 24 fixée sur le support 18.

Entre les électrodes 1 et 2 est connectée une liaison inductive 25. Les deux bornes d'un générateur électrique haute tension 26 sont reliées à travers un interrupteur 33 respectivement au support 18 et au point milieu de la liaison inductive 25.

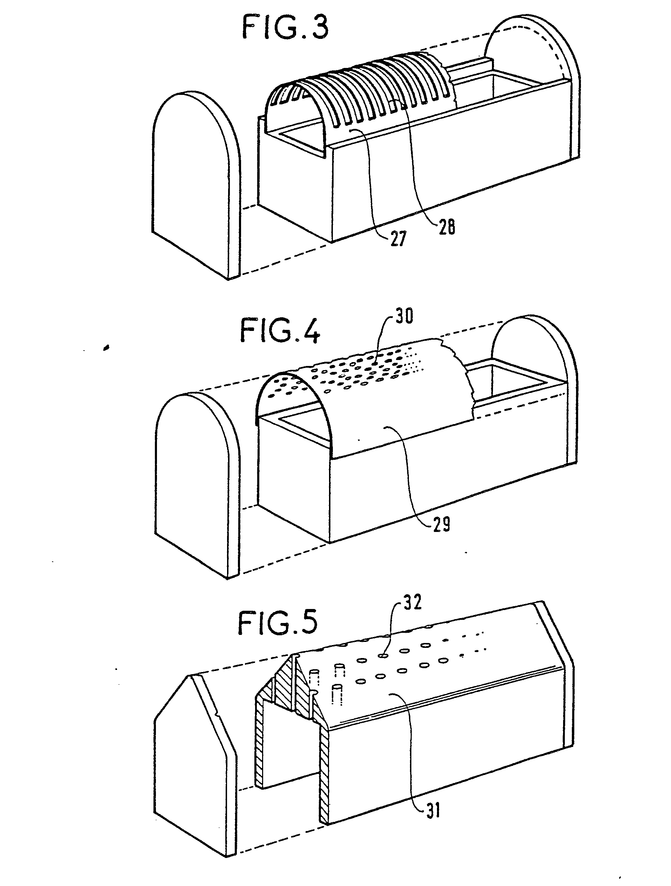

Les figures 3, 4 et 5 sont des vues en perspective éclatée de différents modes de réalisation d'électrodes pouvant s'adapter au laser représenté sur la figure 1, ces vues montrant en particulier comment peuvent être réalisées les ouvertures des surfaces longitudinales.

Sur la figure 3, on voit que la surface longitudinale peut être constituée par une lame métallique 27 en forme de demicylindre. Cette lame est fixée par tout moyen convenable et comporte une sucession de fentes telles que 28 suivant des plans perpendiculaires à l'axe 6 de la cavité et régulièrement espacés entre eux.

Sur la figure 4, la surface longitudinale est constituée par une lame souple 29 recourbée, dont les bords sont fixés par exemple par soudage. La lame 29 comporte une pluralité d'orifices tels que 30 de forme sensiblement circulaire et régulièrement espacés entre eux.

La figure 5 montre que la surface longitudinale 31 peut être réalisée d'un seul bloc avec les faces adjacentes de l'enveloppe. Dans ce mode de réalisation, l'épaisseur de la partie de l'enveloppe correspondant à la surface longitudinale peut être relativement grande et sa section peut avoir par exemple une forme triangulaire. Les ouvertures telles que 32 sont ici réalisées par perçage.

Le laser décrit ci-dessus et illustré par la figure 1 fonctionne de la manière suivante.

On introduit d'abord un gaz actif laser tel que l'azote dans l'enveloppe de l'électrode 1 à travers la canalisation 14 et la percée 13. Ce gaz traverse successivement les ouvertures 10 de la surface longitudinale 7 de l'électrode 1 et les ouvertures 11 de la surface longitudinale 8 de l'électrode 2, de façon à s'écouler transversalement dans l'enceinte 3 dans une direction sensiblement perpendiculaire à l'axe 6. Ce gaz sort de l'enveloppe de l'électrode 2 à travers la percée 16 et la canalisation 17.

L'ensemble constitué par le diélectrique 21, le support 18 et la plaquette 19 forme un condensateur $C_1$ et l'ensemble constitué par le diélectrique 22, le support 18 et la plaquette 20 forme un condensateur $C_2$.

On ferme l'interrupteur 33 afin de provoquer la charge des condensateurs $C_1$ et $C_2$. Lorsque la charge atteint une tension prédéterminée V, une étincelle jaillit aux bornes de l'éclateur constitué par l'électrode auxiliaire 23 et la pointe 24, dont l'écartement mutuel a été réglé à une valeur convenable par vissage de l'électrode auxiliaire 23 dans la plaquette 20. Cette étincelle correspond à la décharge du condensateur $C_2$. La décharge est oscillante, donc au départ la tension V de l'électrode 2 décroît rapidement et prend des valeurs négatives. La tension instantannée entre les électrodes 1 et 2 peut ainsi atteindre une valeur sensiblement égale à 2V. Il en résulte une décharge électrique entre les surfaces longitudinales des électrodes 1 et 2 dans le gaz actif contenu dans l'enceinte 3. Cette décharge électrique excite le gaz actif et provoque la formation d'une impulsion laser sortant de la cavité optique résonnante.

Par rapport au laser à gaz selon l'art antérieur dité dans le préambule de la présente demande, le générateur laser décrit ci-dessus et illustré par la figure 1 présente des avantages importants.

Dans ce générateur laser, la circulation de gaz actif dans l'enceinte s'effectue transversalement par rapport à l'axe de la cavité: on obtient ainsi un renouvellement de gaz dans l'enceinte beaucoup plus rapide, ce qui permet d'augmenter la cadence des impulsions laser. A titre d'exemple il est possible d'obtenir des cadences de répétition de 5 à 10 kHz alors que ces cadences se trouvent limitées, dans le cas d'une circulation longitudinale de gaz, à un taux de l'ordre de 2 à 3 kHz. Cette augmentation de cadence est favorisée aussi par une plus grande homogénéité du gaz actif présent dans l'enceinte. Cette augmentation d'homogénéité provient d'une part de la diffusion du gaz actif qui résulte de son passage à travers les nombreuses ouvertures des surfaces longitudinales en regard. L'augmentation d'homogénéité provient d'autre part de l'orientation transversale de la circulation de gaz dans l'enceinte. En effet dans les lasers selon l'art antérieur, à circulation longitudinale de gaz dans l'enceinte, on observe une diminution importante de pression de gaz entre l'arrivée du gaz dans l'enceinte et son départ. Ce gradient de pression s'accompagne d'un gradient de température en sens inverse. L'effet cumulatif de ces deux phénomènes provoque inévitablement un manque d'homogénéité du gaz dans l'enceinte. Il est clair que dans le laser selon l'invention, ces inconvénients ne peuvent se produire, compte tenu de la faible longueur du trajet de circulation de gaz dans l'enceinte.

Enfin il a été observé que dans le laser selon l'invention, le gaz actif se trouve toujours désexcité après traversée de l'électrode de sortie, ce qui favorise la réalisation d'un circuit fermé de circulation de gaz, avec recyclage. Dans les lasers selon l'art antérieur, on constate au contraire que le gaz actif sortant de l'enceinte est généralement encore excité.

Le laser représenté sur la figure 2 se distingue de celui illustré par la figure 1 par le type d'excitation qui utilise une ligne électrique plate à la place des condensateurs. Ce laser comporte des éléments identiques à ceux du laser illustré par la figure 1, ces éléments étant désignés par les mêmes références numériques. Il comporte notamment deux électrodes creuses 1 et 2 disposées sensiblement dans un plan 5, ces électrodes comprenant deux surfaces longitudinales 7 et 8 en regard l'une de l'autre. Ces électrodes ont exactement la même structure que celles du laser illustré par la figure 1 et peuvent en particulier être réalisées selon les modèles montrés sur les figures 3, 4 et 5. Les surfaces longitudinales 7 et 8 comportent donc une pluralité d'ouvertures telles que 10 et 11. Les deux électrodes 1 et 2 sont logées, comme indiqué sur la figure 2, à l'intérieur d'un support isolant 34 dont l'épaisseur est sensiblement égale à l'épaisseur des électrodes 1 et 2. Le support 34 est traversé par les canalisations 14 et 17 débouchant respectivement dans le volume interne des électrodes 1 et 2.

Le laser illustré par la figure 2 comporte en outre une ligne électrique plate d'excitation comprenant une feuille isolante 35 interposée entre deux feuilles métalliques 36 et 37. La feuille métallique 36 présente une fente 38 la séparant en deux parties. L'axe de la fente 38 est sensiblement perpendiculaire au plan de la figure. Une face plane de l'électrode 1, parallèle au plan 5, est en contact avec une plage plane 39 de la feuille 36, cette plage étant située à proximité et d'un côté de la fente 38. De même, une face plane de l'électrode 2, parallèle au plan 5, est en contact avec une plage plane 40 de la feuille 36, cette plage 40 étant située à proximité et de l'autre côté de la fente 38. Les faces planes des électrodes 1 et 2 en contact avec les plages 39 et 40 sont coplanaires.

La ligne électrique plate est courbée à 180° en 41 de façon que la feuille 36 puisse être appliquée, au delà de la courbure, sur les autres faces parallèles au plan 5 des électrodes 1 et 2, de part et d'autre d'une autre fente 42 symétrique de la fente 38 par rapport au plan 5. La feuille 36 est appliquée sur ces faces suivant deux plages planes 43 et 44 symétriques par rapport au plan 5 des plages 39 et 40.

Il est essentiel d'assurer un bon contact électrique entre les électrodes 1 et 2 et les plages 39, 40, 43 et 44. Pour cela, on dispose deux plaques métalliques rigides opposées 45 et 46 sur la feuille métallique 37, de façon à plaquer la ligne métallique plate contre les électrodes 1 et 2. Une mince couche élastique non représentée sur la figure peut être interposée entre les faces en contact des plaques 45—46 et de la feuille 37, afin d'assurer une meilleure homogénéité de contact. Les plaques 45 et 46 sont serrées énergiquement l'une vers l'autre à l'aide d'un dispositif mécanique comportant, comme il est visible sur la figure, quatre barettes 47—48—49 et 50 et des boulons de fixation 51 sur lesquels viennent s'engager des écrous de serrage 52.

Les deux portions de la feuille isolante 35 dénudées par les fentes 38 et 42 délimitent avec les surfaces longitudinales 7 et 8 des électrodes 1 et 2, la surface latérale d'une enceinte allongée suivant un axe 58 perpendiculaire au plan de la figure, les faces extrêmes de cette surface étant obturées par deux miroirs tels que 59 constituant une cavité optique résonnante d'axe 58.

Dans la partie courbe 41 de la ligne électrique plate est ménagée une percée 53 sensiblement ponctuelle traversant la feuille isolante 35 d'une part et les feuilles metalliques 36 et 37 d'autre part suivant des orifices concentriques. L'orifice de la feuille isolante 35 est plus petit que les orifices des feuilles métalliques 36 et 37, afin d'éviter la formation d'un arc électrique entre les bords des deux feuilles métalliques. Deux électrodes opposées 54 et 55, constituant un éclateur sont disposées suivant une droite normale à la ligne électrique en 53, ces électrodes 54 et 55 étant en contact électrique respectivement avec les feuilles métalliques 36 et 37.

Les deux bornes d'un générateur haute tension 56 sont connectées respectivement aux deux feuilles métalliques à travers un interrupteur 57.

Le laser représenté sur la figure 2 comporte enfin une liaison inductive non représentée assurant la continuité électrique entre les parties de la feuille métallique 36 séparées respectivement par les fentes 38 et 42.

Le laser représenté sur la figure 2 fonctionne de la manière suivante.

On fait d'abord circuler un gaz actif, tel que l'azote, de la canalisation 17 à la canalisation 14. Ce gaz traverse l'enceinte du laser transversalement par rapport à l'axe 58, comme dans le cas du laser illustré par la figure 1.

Après fermeture de l'interrupteur 57 et charge de la ligne, on provoque la formation d'une étincelle entre les électrodes 54 et 55 de l'éclateur. Cette étincelle déclenche une onde de courant se propageant dans la ligne plate de la percée 53 vers les fentes 38 et 42. Cette onde de courant provoque la formation d'une décharge électrique entre les électrodes 1 et 2 du laser. Cette décharge excite le gaz actif en circulation de façon à engendrer une impulsion laser sortant de la cavité optique résonnante.

Ce laser, qui ne diffère du laser de la figure 1 que par le mode d'excitation, présente évidemment les mêmes avantages que ceux mentionnés à propos du laser illustré par la figure 1.

Bien entendu, on comprendra qu'il est possible de réaliser un laser du type de celui illustré par la figure 2, mais utilisant simplement une ligne électrique plate non recourbée ne comportant qu'une seule fente.

**Revendications**

1. Laser à gaz, comprenant
— deux électrodes (1, 2) plates et allongées disposées le long d'un axe (6) dans un même plan (5) passant par l'axe, ces électrodes comportant respectivement deux surfaces latérales internes (7, 8) en regard l'une de l'autre et de part et d'autre de l'axe (6),
— une enceinte (3) entourant l'axe (6) et les surfaces latérales internes (7, 8),

— des moyens pour faire circuler un gaz actif dans l'enceinte, l'amenée de gaz ayant lieu à travers une (2) des électrodes,

— une cavité optique résonante disposée dans l'enceinte suivant ledit axe,

— et des moyens (23, 24) pour déclencher une décharge électrique haute tension entre les deux électrodes, de façon à exciter le gaz actif et créer un rayonnement laser sortant de la cavité, caractérisé en ce que

— chaque électrode (1, 2) est formée d'une enveloppe métallique entourant un volume creux, cette enveloppe comportant une pluralité d'ouvertures (10, 11) traversant la partie de l'enveloppe constituant la surface latérale interne (7, 8), ces ouvertures étant régulièrement espacées entre elles et mettant en communication le volume creux de l'électrode avec l'intérieur de l'enceinte (3)

— et en ce que lesdits moyens pour faire circuler un gaz actif dans l'enceinte comportant des canalisations (14, 17) débouchant dans le volume creux des électrodes (1, 2) de façon que le gaz s'écoule dans l'enceinte (3) transversalement par rapport audit axe (6), la deuxième électrode (1) servant de sortie au gaz.

2. Laser à gaz selon la revendication 1, caractérisé en ce que les surfaces latérales internes (7, 8) sont sensiblement cylindriques, les génératrices de ces surfaces étant parallèles audit axe (6).

3. Laser à gaz selon la revendication 2, caractérisé en ce que lesdites ouvertures sont des fentes (28) disposées suivant des plans perpendiculaires audit axe.

4. Laser à gaz selon la revendication 2, caractérisé en ce que lesdites ouvertures sont des orifices (30) sensiblement circulaires.

5. Laser à gaz selon la revendication 4, caractérisé en ce que chaque surface latérale interne est formée d'une lame métallique (29) souple comportant lesdits orifices, cette lame étant courbée pour présenter une surface sensiblement cylindrique.

6. Laser selon la revendication 1, caractérisé en ce que les moyens pour déclencher une décharge électrique entre les deux électrodes comportent:

— un premier condensateur comprenant un bloc diélectrique (22) disposé entre deux armatures (20, 18), une première (20) de ces armatures étant connectée à une première (2) desdites électrodes,

— un deuxième condensateur comprenant un bloc diélectrique (21) disposé entre deux armatures (19, 18), une première (19) de ces armatures étant connectée à la deuxième électrode (1), les deuxièmes armatures (18) des premier et deuxième condensateurs étant connectées entre elles,

— une inductance (25) connectée entre la première et la deuxième électrode (2, 1),

— un circuit (26, 33) pour charger les premier et deuxième condensateurs à une même tension électrique élevée,

— et des moyens (23, 24) pour court-circuiter les deux armatures (20, 18) du premier condensateur.

7. Laser selon la revendication 1, caractérisé en ce que, l'enveloppe de chaque électrode (1, 2) comportant une première face et une deuxième face opposées, adjacentes à ladite surface latérale interne (7, 8), les premières faces planes des deux électrodes étant coplanaires, et disposées d'un côté dudit plan (5) parallèlement à ce plan, les deuxièmes faces planes des deux électrodes étant coplanaires et disposées de l'autre côté dudit plan parallèlement à ce plan, les moyens pour déclencher une décharge électrique entre les deux électrodes comportent:

— une ligne électrique plate formée d'une feuille isolante (35) interposée entre une première et une seconde feuilles métalliques (36, 37), la première feuille métallique (36) présentant deux fentes (38, 42) séparant cette feuille en trois parties, la ligne électrique étant courbée à 180° de manière que les deux fentes (38, 42) soient en regard l'une de l'autre,

— des moyens pour appliquer

· deux plages (43, 44) de la première feuille métallique (36), adjacentes à une première (42) desdites fentes, respectivement sur les premières faces planes des deux électrodes (1, 2)

· et deux plages (39, 40) de la première feuille métallique (36), adjacentes à la deuxième fente (38), respectivement sur les deuxièmes faces planes des deux électrodes (1, 2),

— deux inductances, les extrémités d'une première de ces inductances étant connectées respectivement aux deux parties de la première feuille métallique (36) adjacentes à la première fente (38), les extrémités de la deuxième inductance étant connectées respectivement aux deux parties de la première feuille métallique (36) adjacentes à la deuxième fente (42), de manière à assurer la continuité électrique entre les trois parties de la première feuille métallique (36),

— des moyens pour établir entre la première (36) et deuxième (37) feuilles métalliques une différence de potentiel elevée,

— et des moyens (54, 55) pour déclencher une décharge électrique entre les première (36) et deuxième (37) feuilles métalliques à travers une percée (53) de la ligne, cette percée étant disposée dans la partie courbe de ladite ligne.

**Patentansprüche**

1. Gaslaser mit

— zwei flachen und länglichen Elektroden (1, 2), die entlang einer Achse (6) in einer gemeinsamen, durch die Achse verlaufenden Ebene (5) angeordnet sind und die zwei innere seitliche Oberflächen (7 bzw. 8) aufweisen, die einander auf beiden Seiten der Achse (6) gegenüberliegen,

— einem Gehäuse (3), das die Achse (6) und die inneren seitlichen Oberflächen (7, 8) umgibt,

— Mitteln, um ein aktives Gas in dem Gehäuse zirkulieren zu lassen, wobei die Gaszufuhr durch eine der Elektroden (2) erfolgt,

— einem optischen Resonanzanzhohlraum, der in dem Gehäuse entlang der Achse angeordnet ist,

— und Mitteln (23, 24), um eine elektrische Hochspannungsentladung zwischen den beiden Elektroden auszulösen, um so das aktive Gas anzuregen und eine aus dem Hohlraum austretende Laserstrahlung zu erzeugen, dadurch gekennzeichnet, daß

— jede Elektrode (1, 2) aus einer metallischen Umhüllung gebildet wird, die ein hohles Volumen umgibt, wobei diese Umhüllung eine Vielzahl von Öffnungen (10, 11) aufweist, die den Teil der Umhüllung durchqueren, die die innere seitliche Oberfläche (7, 8) bildet, wobei diese Öffnungen regelmäßige Abstände voneinander besitzen und das hohle Volumen der Elektrode mit dem Inneren des Gehäuses (3) in Verbindung bringen,

— und daß die Mittel, um ein aktives Gas im Gehäuse zirkulieren zu lassen, Leitungen (14, 17) aufweisen, die in das hohle Volumen der Elektroden (1, 2) münden, so daß das Gas im Gehäuse (3) quer zur Achse (6) fließt, wobei die zweite Elektrode (1) als Gasauslaß dient.

2. Gaslaser nach Anspruch 1, dadurch gekennzeichnet, daß die inneren seitlichen Oberflächen (7, 8) im wesentlichen zylindrisch sind, wobei die Mantellinien dieser Oberflächen parallel zur Achse (6) liegen.

3. Gaslaser nach Anspruch 2, dadurch gekennzeichnet, daß die Öffnungen Schlitze (28) sind, die in zur Achse senkrechten Ebenen angeordnet sind.

4. Gaslaser nach Anspruch 2, dadurch gekennzeichnet, daß die Öffnungen im wesentlichen kreisförmige Öffnungen (30) sind.

5. Gaslaser nach Anspruch 4, dadurch gekennzeichnet, daß jede innere seitliche Oberfläche von einer biegsamen Metalllamelle (29) gebildet wird, die die Öffnungen aufweist und so gekrümmt ist, daß sie eine im wesentlichen zylindrische Oberfläche aufweist.

6. Gaslaser nach Anspruch 1, dadurch gekennzeichnet, daß die Mittel zum Auslösen einer elektrischen Entladung zwischen den beiden Elektroden

— einen ersten Kondensator, der einen dielektrischen Block (22) aufweist, welcher zwischen zwei Belägen (20, 18) angeordnet ist, wobei ein erster (20) dieser Beläge mit einer ersten der Elektroden (2) verbunden ist,

— einen zweiten Kondensator, der einen dielektrischen Block (21) aufweist, welcher zwischen zwei Belägen (19, 18) angeordnet ist, wobei ein erster (19) dieser Beläge mit der zweiten Elektroden (1) verbunden ist und die zweiten Beläge (18) des ersten und des zweiten Kondensators miteinander verbunden sind,

— eine Induktanz (25), die zwischen die erste und die zweite Elektrode (2, 1) geschaltet ist,

— einen Kreis (26, 33), um den ersten und den zweiten Kondensator mit einer gleichen hohen elektrischen Spannung zu laden,

— und Mittel (23, 24) aufweisen, um die beiden Beläge (20, 18) des ersten Kondensators kurzzuschließen.

7. Laser nach Anspruch 1, dadurch gekennzeichnet, daß die Umhüllung jeder Elektrode (1, 2) gegenüberliegende erste und zweite Seiten aufweist, die neben der inneren seitlichen Oberfläche (7, 8) liegen, wobei die ersten flachen Seiten der beiden Elektroden koplanar und auf einer Seite dieser Ebene (5) parallel zu dieser Ebene angeordnet sind, während die zweiten flachen Seiten der beiden Elektroden koplanar und auf der anderen Seite der Ebene parallel zu dieser Ebene angeordnet sind, und daß die Mittel, um eine elektrische Entladung zwischen den beiden Elektroden hervorzurufen,

— eine flache elektrische Leitung gebildet aus einer isolierenden Folie (35), die zwischen einer ersten und einer zweiten Metallfolie (36, 37) liegt, wobei die erste Metallfolie (36) zwei Schlitze (38, 42) aufweist, die diese Folie in drei Teile teilen, wobei die elektrische Leitung um 180° gekrümmt ist, so daß die beiden Schlitze (38, 42) einander gegenüberliegen,

— Mittel,

· um zwei Bereiche (43, 44) der ersten Metallfolie (36), die neben einem ersten (42) der Schlitze liegen, jeweils auf die ersten ebenen Seiten der beiden Elektroden (1, 2) zu drücken,

· und um zwei Bereiche (39, 40) der ersten Metallfolie (36), die neben dem zweiten Schlitz (38) liegen, jeweils auf die zweiten ebenen Seiten der beiden Elektroden (1, 2) zu drücken,

— zwei Induktanzen, wobei die Enden einer ersten dieser Induktanzen je mit den beiden Teilen der ersten Metallfolie (36) verbunden sind, die neben dem ersten Schlitz (38) liegen, während die Enden der zweiten Induktanz je mit den beiden Teilen der ersten Metallfolie verbungen sind, die neben dem zweiten Schlitz (42) liegen, um so die elektrische Kontinuität zwischen den drei Teilen der ersten Metallfolie (36) zu bewirken,

— Mittel, um zwischen der ersten (36) und zweiten Metallfolie (37) eine hohe Potentialdifferenz herzustellen,

— und Mittel (54) aufweisen, um eine elektrische Entladung zwischen der ersten (36) und der zweiten Metallfolie (37) durch eine Bohrung (53) der Leitung hindurch auszulösen, wobei diese Bohrung im gekrümmten Teil der Leitung liegt.

**Claims**

1. A gas laser comprising
— two flat and elongated electrodes (1, 2) disposed along an axis (6) in a common plane (5), which passes through the axis, these electrodes comprising two lateral inner surfaces (7 and 8 respectively) facing each other and located on both sides of the axis (6),

— a chamber (3) surrounding the axis (6) and the lateral inner surfaces (7, 8),

— means for making an active gas circulate in the chamber, the gas supply being effected through one (2) of the electrodes,

— an optical resonant cavity disposed in the chamber along the axis,

— and means (23, 24) for releasing an electric high voltage discharge between the two electrodes, so as to excite the active gas and create a laser radiation which escapes from the cavity, characterized in that

— each electrode (1, 2) is formed by a metal envelope surrounding a hollow volume, this envelope comprising a plurality of openings (10, 11) traversing the part of the envelope constituting the lateral inner surface (7, 8), these openings being regularly spaced out and making the hollow volume of the electrode communicate with the interior of the chamber (3),

— and in that said means for making an active gas circulate in the chamber comprise channels (14, 17) which communicate with the hollow volume of the electrodes (1, 2) so that the gas flows in the chamber (3) transversely with respect to said axis (6), the second electrode (11) serving as gas outlet.

2. A gas laser according to claim 1, characterized in that the lateral inner surfaces (7, 8) are essentially cylindrical, the generatrix lines of these surfaces being parallel to said axis (6).

3. A gas laser according to claim 2, characterized in that said openings are constituted by slits (28) which are disposed in perpendicular planes with respect to said axis.

4. A gas laser according to claim 2, characterized in that said openings are constituted by essentially circular orifices (30).

5. A gas laser according to claim 4, characterized in that each lateral inner surface is made of a flexible metal strip (29) comprising said orifices, this strip being curved so as to present an essentially cylindrical surface.

6. A laser according to claim 1, characterized in that the means for releasing an electrical discharge between the two electrodes comprise:

— a first capacitor comprising a dielectrical block (22) disposed between two plates (20, 18), a first one (20) of these plates being connected to a first one (2) of said electrodes,

— a second capacitor comprising a dielectrical block (21) disposed between two plates (19, 18), a first one (19) of these plates being connected to the second electrode (1), the second plates (18) of the first and second capacitor being interconnected,

— an inductance (25) connected between the first and the second electrode (2, 1),

— a circuit (26, 33) for charging the first and second capacitors to the same high electrical voltage,

— and means (23, 24) for short-circuiting the two plates (20, 18) of the first capacitor.

7. A laser according to claim 1, characterized in that the envelope of each electrode (1, 2) comprising a first face and a second face opposed to each other and adjacent to said lateral inner surface (7, 8), the first plane faces of the two electrodes being coplanar and being disposed on one side of said plane (5) parallelly to that plane, the second plane faces of the two electrodes being coplanar and disposed on the other side of said plane parallelly to that plane, the means for releasing an electrical discharge between the two electrodes comprise:

— a flat electrical line formed by an insulating sheet (35) interposed between a first and a second metal sheet (36, 37), the first metal sheet (36) presenting two slits (38, 42) dividing this sheet in three parts, the electrical line being curved at 180° so that the two slits (38, 42) face each other,

— means for applying

· two ranges (43, 44) of the first metal sheet (36), adjacent to a first one (42) of said slits, respectively on the first plane faces of the two electrodes (1, 2)

· and two ranges (39, 40) of the first metal sheet (36), adjacent to the second slit (38), respectively on the second plane faces of the two electrodes (1, 2),

— two inductances, the terminals of a first one of these inductances being connected respectively to the two parts of the first metal sheet (36) adjacent to the first slit (38), the terminals of the second inductance being connected respectively to the two parts of the first metal sheet (36) adjacent to the second slit (42), so as to ensure the electrical continuity between the three parts of the first metal sheet (36),

— means for establishing between the first (36) and second metal sheet (37) a high voltage,

— and means (54, 55) for releasing an electrical discharge between the first (36) and second metal sheet (37) through an opening (53) of the line, this opening being disposed in the curved part of the line.

FIG.1

FIG.2

# FIG.3

27    28

# FIG.4

30

29

# FIG.5

32

31